# EUROPÄISCHE PATENTSCHRIFT

(11) **EP 2 405 853 B1**
(45) Veröffentlichungstag und Bekanntmachung des Hinweises auf die Patenterteilung: **14.02.2018**
(21) Anmeldenummer: 10711868.9
(22) Anmeldetag: 10.03.2010
(51) Int. Cl.: A61C 13/00, B23Q 39/02

(54) **BEARBEITUNGSMASCHINE FÜR EIN WERKSTÜCK ZUR ERSTELLUNG VON ZAHNERSATZTEILEN ODER MODELLEN DAVON UND VERFAHREN**
MACHINE TOOL FOR A WORKPIECE FOR MAKING DENTAL PROSTHESES OR MODELS THEREOF, AND A METHOD
MACHINE D'USINAGE POUR UNE PIÈCE D' OEUVRE POUR FABRIQUER DES PROTHÈSES DENTAIRES OU DES MODÈLES DE CES DERNIÈRES, ET PROCÉDÉ CORRESPONDANT

(30) Priorität: 10.03.2009 DE 102009001428
(43) Veröffentlichungstag der Anmeldung: 18.01.2012
(73) Patentinhaber: Sirona Dental Systems GmbH, 64625 Bensheim (DE)
(72) Erfinder: BASLER, Franz, 69514 Laudenbach (DE)
(74) Vertreter: Sommer, Peter
(86) Internationale Anmeldenummer: PCT/EP2010/053006
(87) Internationale Veröffentlichungsnummer: WO 2010/103024

(56) Entgegenhaltungen:
- DE-A1-102005 016 245
- DE-C1- 19 928 002
- US-A- 3 187 635
- US-A1- 2007 243 503
- US-B1- 7 044 690

## Beschreibung

### Technisches Gebiet

Die Erfindung betrifft eine Bearbeitungsmaschine für ein Werkstück, insbesondere zur Erstellung von Zahnersatzteilen oder Modellen davon, aufweisend eine Werkstückaufnahme für das Werkstück und ein erstes und ein zweites Bearbeitungswerkzeug, wobei die Werkstückaufnahme einerseits und das erste und das zweite Bearbeitungswerkzeug andererseits entlang einer durch die Werkstückaufnahme verlaufenden ersten Vorschubachse relativ zueinander verstellbar sind. Das erste Bearbeitungswerkzeug ist auf einer ersten Seite der Vorschubachse und das zweite Bearbeitungswerkzeug auf einer der ersten Seite gegenüberliegenden Seite der Vorschubachse angeordnet und das erste und zweite Bearbeitungswerkzeug ist entlang einer durch das Bearbeitungswerkzeug verlaufenden zweiten Vorschubachse relativ zu dem Werkstück verstellbar. Dabei ist das Werkstück um mindestens 180 Grad um die erste Vorschubachse drehbar.

Ein weiterer Gegenstand der Erfindung ist ein Verfahren zur Erstellung von Zahnersatzteilen oder Modellen davon.

### Stand der Technik

Aus der EP 0 455 853 B1 ist eine Schleifmaschine für Dentalwerkstoffe mit einer starren senkrechten Zuordnung der Werkzeugachsen zur Werkstückachse bekannt. Zur Bearbeitung der Okklusalfläche kann eines von zwei an einem Werkzeugträgerkopf angeordneten Werkzeugen einen spitzen Winkel von 45° zur Horizontalen aufweisen.

Eine Verdrehung der Werkstückachse um die Vorschubachse ist aus der DE 199 28 002 C1 bekannt. Dies erlaubt aber nur Hinterschnitte in bukko-lingualer Richtung.

Nachteilig ist, dass sich keine Hinterschneidungen in mesio-distaler Richtung herstellen lassen, ohne dafür einen großen Rohling zu verwenden.

Da eine Restauration nicht unbedingt eine lineare Einschubrichtung hat, dass also während des Aufsetzen einer Restauration auf die Präparation die Aufsetzrichtung verändert wird, ist die Möglichkeit der Herstellung von Hinterschneidungen auch in mesio-distaler Richtung wünschenswert, um einen passgenauen Zahnersatz zu erhalten.

### Darstellung der Erfindung

Mit der in Anspruch 1 angegebenen Erfindung und dem Verfahren nach Anspruch 4 wird das Problem gelöst. Der Grundgedanke der Erfindung besteht darin, die Werkstückachse und die Werkzeugachse, die eigentlich senkrecht zueinander stehen, um einige Grad zu verkippen. Eine Veränderung der Anordnung der Werkstückachse zu den Werkzeugachsen erfüllt genau die erforderlichen Ansprüche der verbesserten Anwendung, ohne in die Maschine einen weiteren Freiheitsgrad mit den damit verbundenen nachteiligen Auswirkungen auf die Kosten, die Stabilität und den Steuerungsaufwand einzubauen. Anstelle eines vollständigen fünften Freiheitsgrads wird also lediglich eine Verkippung von relativ geringem Ausmaß vorgesehen, wobei 5° bereits als ausreichend angesehen werden können.

Vorteilhafte Weiterbildungen sind in den Unteransprüchen beschrieben.

### Kurzbeschreibung der Zeichnung

Das erfindungsgemäße Verfahren wird anhand der Zeichnung erläutert. Es zeigen:
- Fig. 1: einen Teil einer Bearbeitungsmaschine für ein Werkstück, insbesondere zur Erstellung von Zahnersatzteilen oder Modellen davon,
- Fig. 2: eine alternative Ausführung zu Fig. 1,
- Fig. 3: die Bearbeitung eines Werkstücks in einer ersten Position,
- Fig. 4: die Bearbeitung des Werkstücks aus Fig. 3 in einer zweiten Position,
- Fig. 5A: die Anordnung eines aus einem Rohling herzustellenden Zahnersatzteils nach dem Stand der Technik,
- Fig. 5B: die Anordnung eines aus einem Rohling herzustellenden Zahnersatzteils gemäß der Erfindung,
- Fig. 6: eine herzustellende Innenkontur mit einer ihre Neigung mit zunehmender Eindringtiefe ändernden Einschubachse,
- Fig. 7: eine dentale Schleifmaschine gemäß der Erfindung.

### Ausführungsbeispiele der Erfindung

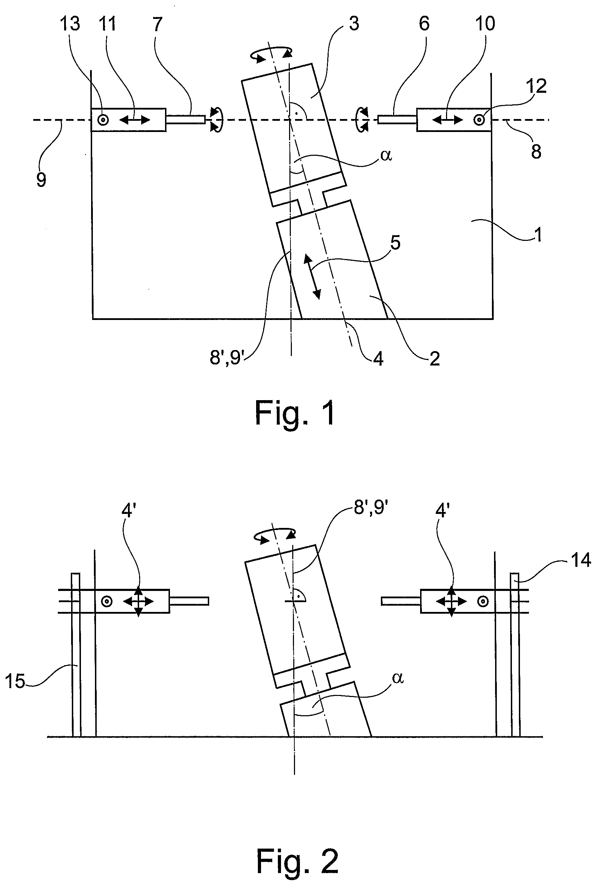

In Fig. 1 ist ein Teil einer Bearbeitungsmaschine für ein Werkstück, insbesondere zur Erstellung von Zahnersatzteilen oder Modellen davon, dargestellt, nämlich ein Bearbeitungsraum 1. In den Bearbeitungsraum 1 ragt eine Werkstückaufnahme 2 für ein Werkstück 3, die entlang ihrer Vorschubachse 4 in Richtung des Pfeils 5 in den Bearbeitungsraum 1 hinein und wieder zurück verstellbar ist.

In den Bearbeitungsraum 1 sind auch ein erstes und ein zweites Bearbeitungswerkzeug 6, 7 angeordnet, wobei das erste Bearbeitungswerkzeug 6 auf einer ersten Seite der Vorschubachse 4 der Werkstückaufnahme 2 und das zweite Bearbeitungswerkzeug 7 auf einer der ersten Seite gegenüberliegenden Seite der Vorschubachse 4 der Werkstückaufnahme 2 angeordnet ist.
Das erste und zweite Beareitungswerkzeug 6, 7 ist jeweils entlang einer durch das Bearbeitungswerkzeug 6, 7 festgelegten Vorschubachse 8, 9 relativ zu dem Werkstück 3 verstellbar. Die Verstellung erfolgt sowohl zum Werkstück 3 hin und von diesem weg, dargestellt durch die Pfeile 10, 11, als auch in einer Richtung aus der zeichenebene hinaus bzw. hinein, dargestellt durch das Symbol für eine Pfeilspitze 12, 13. Die Vorschubachsen 8, 9 und 12, 13 können in einer gemeinsamen Ebene liegen, wie dargestellt, die Ebenen können aber auch zueinander beabstandet sein, etwa wenn das Beareitungswerkzeug 7 auf einer anderen Höhe am Werkstück 3 in Eingriff sein soll als das Bearbeitungswerkzeug 6. Allgemein gilt, dass die Werkstückaufnahme 2 für das Werkstück 3 einerseits und das erste und das zweite Bearbeitungswerkzeug 6, 7 andererseits entlang einer durch die Werkstückaufnahme 2 festgelegten ersten Vorschubachse 4 relativ zueinander verstellbar sind, sodass auch das Werkstück aus der Zeichenebene heraus bewegt werden könnte anstelle der dargestellten Bewegung der Bearbeitungswerkzeuge. Die Vorschubachse 4 der Werkstückaufnahme 2 schließt mit einer Senkrechten 8', 9' zu der zweiten Vorschubachse 8, 9 der beiden Bearbeitungswerkzeuge 6, 7 einen fest vorgegebenen Winkelversatz α von höchstens 15 Grad und wenigstens zwei Grad ein, vorzugsweise 5°. Dies hat zur Folge, dass die Werkzeugaufnahme 2 gegenüber den Bearbeitungswerkzeugen 6, 7 schräg steht.

In Fig. 2 ist dargestellt, dass anstelle des Vorschubs der nun feststehenden, um den Winkel Alpha gegenüber der Senkrechten 8', 9' auf der zweiten Vorschubachse 8, 9 schräg stehenden Werkstückaufnahme 2 auch eine Verstellung der Bearbeitungswerkzeuge 6, 7 entlang der ersten Vorschubachse 4' möglich ist. Die Bearbeitungswerkzeuge 6, 7 können dazu auf einer Führung 14, 15 entlang der ersten Vorschubachse 4' verstellbar angeordnet sein.

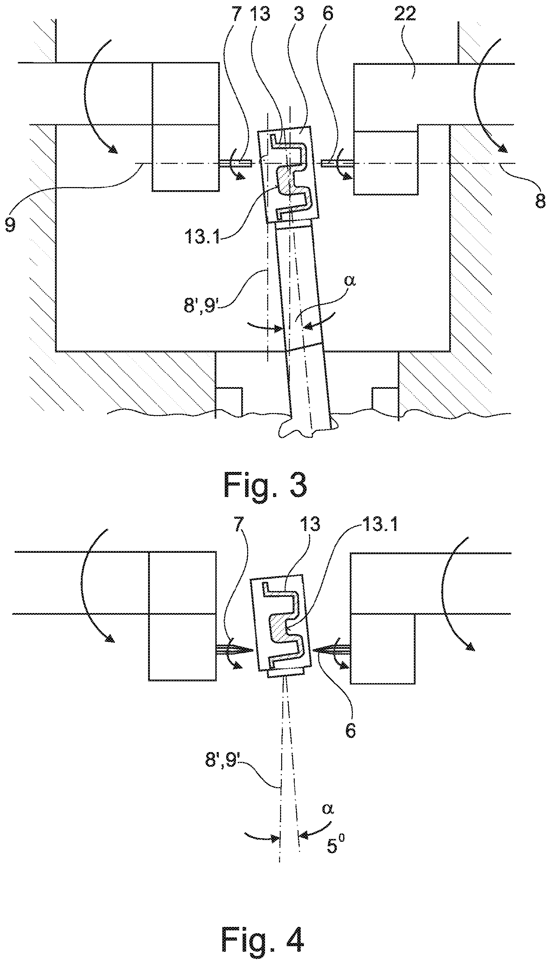

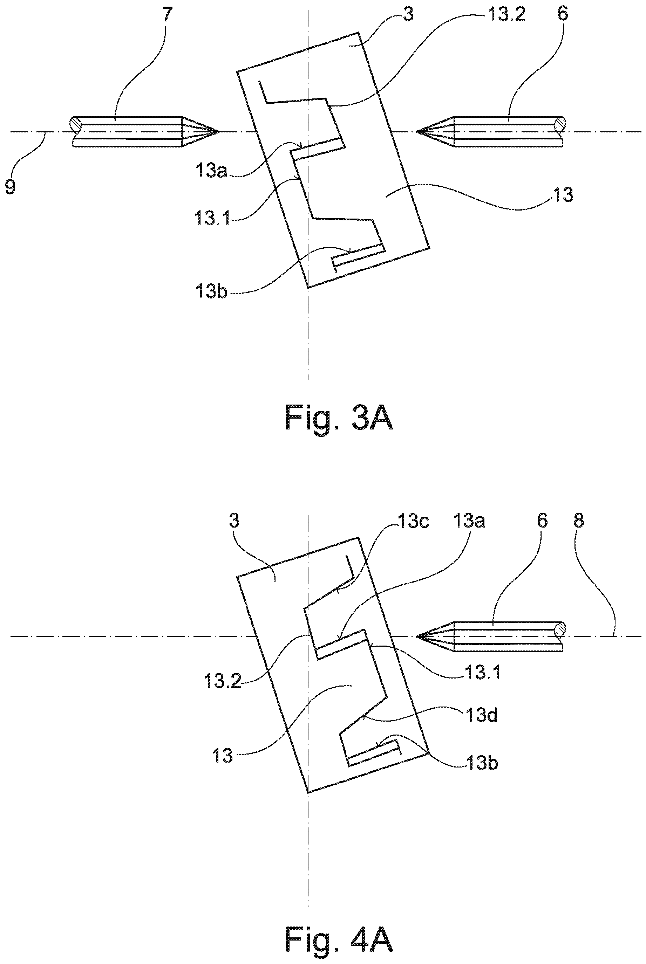

In den Fig. 3 und 4 ist die Herstellung von Hinterschneidungen in mesial-distaler Richtung anhand eines aus dem Werkstück 3 herauszuarbeitenden Gerüsts 13 erläutert, wobei von einer Bearbeitungsmaschine mit einem Aufbau nach Fig. 1 ausgegangen wird. Die wie mit den kleinen Pfeilen angedeutet, sich um sich selbst drehenden Werkzeuge 6,7, können dabei aus der Zeichenebene heraus und in die Zeichenebene hinein verschwenkt werden, angedeutet durch die großen Pfeile.
In der in Fig. 3 gezeigten ersten Position lässt sich die cervikale Seite 13.1 des gegen den Uhrzeigersinn gegenüber der Senkrechten 8',9' verkippten Werkstücks 3 mit dem Werkzeug 7 bearbeiten und es können Hinterschneidungen, jeweils bezogen auf die Werkstückachse 8, 9 bis zu einem Winkelbereich entsprechend dem Verkippungswinkel Alpha hergestellt werden. In Fig. 3A ist dies im Detail dargestellt. Am Werkstück 3 werden die nur in dieser Position herzustellenden Flächen 13a, 13b des Gerüsts 13 mittels des entlang der Vorschubachse 9 von der cervikalen Seite 13.1 her geführten Bearbeitungswerkzeugs 7 bearbeitet. Die gegenüberliegende Seite 13.2 des Gerüsts 13, die eine Außenseite ist, kann mit dem Bearbeitungswerkzeug 6 vollständig hergestellt werden.

In einem in Fig. 4 dargestellten zweiten Schritt ist das Werkstück 3 in die zweiten Position gebracht, wozu vorzugsweise das Werkstück 3 um 180° gedreht wurde. In dieser Position lässt sich die Innenkontur des im Uhrzeigersinn gegenüber der Senkrechten 8',9' gedrehten Werkstücks 3 mit dem Werkzeug 6 bearbeitet. In Fig. 4A ist dies im Detail dargestellt. Am Werkstück 3 werden die nur in dieser Position herzustellenden Flächen 13c, 13d des Gerüsts 13 mittels des entlang der Vorschubachse 8 von der cervikalen Seite 13.1 her geführten Bearbeitungswerkzeugs 6 bearbeitet. Die Flächen 13a, 13b können jedoch nicht weiter bearbeitet werden, da sie in dieser Position eine Hinterschneidung darstellen. Die gegenüberliegende Seite 13.2 des Gerüsts 13, die eine Außenseite ist, muss nicht mehr bearbeitet werden, könnte aber mit dem Bearbeitungswerkzeug 7 noch vervollständigt werden, wenn dies erforderlich wäre.

Je nach Erfordernissen kann entsprechend des Bearbeitungsplans entschieden werden, ob das Werkstück 3 gleichzeitig mittels zweier Bearbeitungswerkzeuge 6, 7 in Position 1 oder 2 bearbeitet wird oder ob die Bearbeitung einer Seite des Werkstücks 3 in zwei Arbeitsdurchgängen in den Positionen 1 und 2 und mit zwei Bearbeitungswerkzeugen 6, 7 nacheinander durchgeführt wird.

Die Bearbeitung der okklusalen Seite ist durch die Verkippung der Achsen kaum betroffen, weil diese Außenfläche von dem Werkzeug vollständig erreicht werden kann, auch deshalb, weil in der Regel keine Hinterschneidungen vorhanden sind und die Öffnungswinkel der Oberflächenstrukturen, z.B. der Fissuren, ausreichend groß ist. Bei den Innenflächen hingegen handelt es sich um einseitig geschlossene Flächen, die von der geschlossenen Seite her naturgemäß nicht bearbeitet werden können.

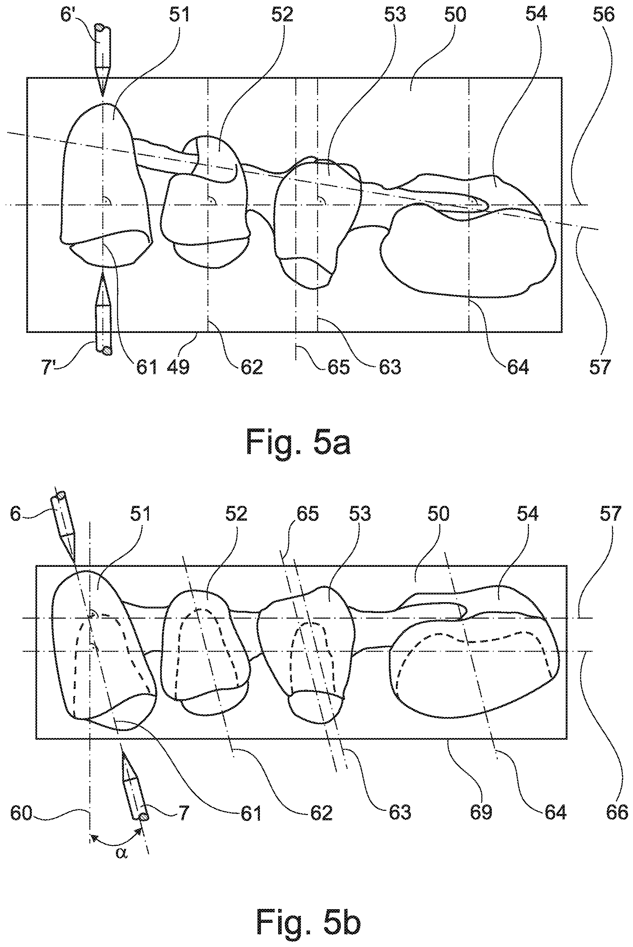

In den Fig. 5A, 5B ist ein aus einem Rohling 49, 69 herzustellendes Zahnersatzteil 50 mit vier Gliedern 51, 52, 53, 54 dargestellt.

In Fig. 5A ist das Zahnersatzteil 50 dem Stand der Technik entsprechend schräg in dem Rohling 49 angeordnet, d.h. die Mittelachse 56 des Rohlings 49 und die Mittelachse 57 des Zahnersatzteils stehen schräg zueinander. Diese schräge Anordnung wird so gewählt, dass das Bearbeitungswerkzeug 7' die Innenkontur des Zahnersatzteils 50 entlang der Bearbeitungsachsen 61 - 64 herstellen kann. Die Bearbeitungsachsen 61-64 stehen hierbei senkrecht auf der Mittelachse 56 des Rohlings und schräg zur Mittelachse 57 des Zahnersatzteils 50 und entsprechen im wesentlichen einer Einschubachse 65 des Zahnersatzteils.

In Fig. 5b ist das Zahnersatzteil 50 erfindungsgemäß so in einem Rohling 69 angeordnet, dass die Einschubachse 65 des Zahnersatzteils 50 um einen Winkel Alpha schräg zur Senkrechten 60 zur Mittelachse 66 des Rohlings 69 liegt. Die Richtung der Bearbeitungsachsen 61-64 entsprechen der Einschubachse 65 und das Bearbeitungswerkzeug 7 kann eine gestrichelt dargestellte Innenkontur des Zahnersatzteils 50 zumindest teilweise herstellen. Nach einem Verdrehen des Rohlings um die Mittelachse 66 kann mit dem anderen Bearbeitungswerkzeug 6 die verbleibende Innenkontur herausgearbeitet werden.

Im vorliegenden Fall sind die Mittelachse 66 des Rohlings 69 und die Mittelachse 57 des Zahnersatzteils 50 in etwa parallel zueinander. Diese in etwa parallele Anordnung hat gegenüber der Anordnung aus Fig. 5a zur Folge, dass ein kleinerer Rohling 69 gewählt werden kann. Dies hat den Vorteil, dass das zu bearbeitende Volumen des Rohlings verringert wird, wodurch sich Zeitvorteile bei der Bearbeitung ergeben und die Lebensdauer der Schleifwerkzeuge verbessert wird. Darüber hinaus ist die Verwendung eines kleineren Rohlings kostengünstiger als die eines großen.

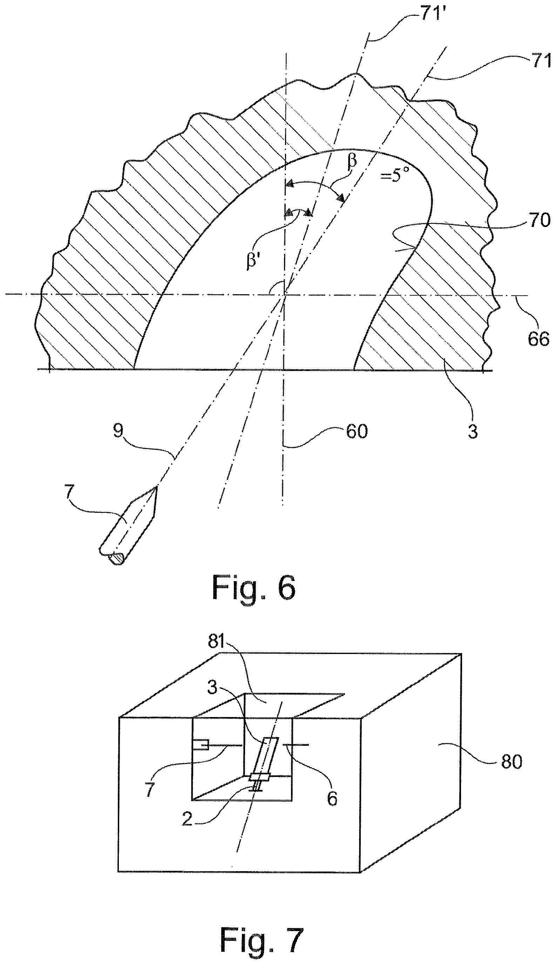

In Fig. 6 ist eine in dem Werkstück 3 herzustellende Innenkontur 70 gezeigt, bei der die Einschubachse 71 ihre Neigung mit zunehmender Eindringtiefe in die Innenkontur 70 ändert. Ausgehend von einer Schrägstellung der Einschubachse 71' um den Winkel Beta' gegenüber der Senkrechten 60 zur Mittelachse 66 des Werkstücks 3 am Anfang der Innenkontur, d.h. am offenen Ende, ändert sich die Schrägstellung der Einschubachse 71 mit dem Winkel Beta am Ende der Innenkontur 70.

Der Winkel Beta der Einschubachse 71 kann dabei bis zu dem Winkel Alpha der Vorschubachse 9 des Bearbeitungswerkzeugs 7 gegenüber der Senkrechten 60 zur Mittelachse 66 des Werkstücks 3 anwachsen.

In Fig. 7 ist eine dentale Schleifmaschine 80 als Beispiel für eine Bearbeitungsmaschine gezeigt, bei der ein auf einem Werkstückhalter 2 befindliches Werkstück 3 schräg in einem Bearbeitungsraum 81 angeordnet ist und mittels der Bearbeitungswerkzeuge 6, 7 von beiden Seiten her bearbeitbar ist.

Allgemein gilt, dass sich durch den Winkelversatz zwischen der Senkrechten 60 zur Vorschubachse 4 des Werkstücks 3 und der Vorschubachse 9 des Bearbeitungswerkzeugs 7 oder in umgekehrter Sichtweise zwischen der Senkrechten 8',9' auf die Vorschubachse 8,9 der Werkzeuge 6,7 und der Werkstückachse 4 die Innenkontur 70 bei optimaler Ausnutzung des Rohlings vollständig herausarbeiten lässt. Dies bedeutet auch, dass der zur Verfügung stehende Bearbeitungsraum 81 besser ausgenutzt wird, ohne größer zu werden und längere Bearbeitungswerkzeuge bzw. Verstellwege zu erfordern.

## Patentansprüche

1. Bearbeitungsmaschine für ein Werkstück (3) zur Erstellung von Zahnersatzteilen (13) oder Modellen davon, aufweisend eine Werkstückaufnahme (2) für das Werkstück (3) und ein erstes und ein zweites Bearbeitungswerkzeug (6, 7), wobei die Werkstückaufnahme (2) einerseits und das erste und das zweite Bearbeitungswerkzeug (6, 7) andererseits entlang einer durch die Werkstückaufnahme (2) verlaufenden ersten Vorschubachse (4) relativ zueinander verstellbar sind, wobei das erste Bearbeitungswerkzeug (6) auf einer ersten Seite der Vorschubachse (4) und das zweite Bearbeitungswerkzeug (7) auf einer der ersten Seite gegenüberliegenden Seite der Vorschubachse (4) angeordnet ist, wobei das erste und zweite Bearbeitungswerkzeug (6, 7) entlang einer durch das Bearbeitungswerkzeug (6, 7) verlaufenden zweiten Vorschubachse (8, 9) relativ zu dem Werkstück (3) verstellbar sind, wobei das Werkstück (3) um mindestens 180 Grad um die erste Vorschubachse (4) drehbar ist, **dadurch gekennzeichnet, dass** die erste Vorschubachse (4) mit einer Senkrechten (8', 9') zu der zweiten Vorschubachse (8, 9) der beiden Bearbeitungswerkzeuge (6, 7) einen fest vorgegebenen Winkelversatz (α) zwischen 2 Grad und 15 Grad einschließt.

2. Bearbeitungsmaschine nach Anspruch 1, **dadurch gekennzeichnet, dass** der Winkelversatz (α) in einem Bereich von 3 bis 10 Grad liegt, insbesondere in einem Bereich von 3,5 bis 8 Grad.

3. Bearbeitungsmaschine nach einem der Ansprüche 1 bis 2, **dadurch gekennzeichnet, dass** die Werkstückaufnahme (2) entlang der ersten Vorschubachse (4) feststeht und dass das Bearbeitungswerkzeug (6, 7) auf einer Führung (14, 15) angeordnet ist und an dem Werkstück (3) entlang der ersten Vorschubachse (4') verstellbar ist.

4. Verfahren zur Erstellung von Zahnersatzteilen (13) oder Modellen davon, mit einem ersten und einem zweiten Bearbeitungswerkzeug (6, 7), wobei eine Werkstückaufnahme (2) für das Werkstück (3) einerseits und das erste und das zweite Bearbeitungswerkzeug andererseits (6, 7) entlang einer durch die Werkstückaufnahme verlaufenden ersten Vorschubachse (4) relativ zueinander verstellbar sind, wobei das erste Bearbeitungswerkzeug (6) auf einer ersten Seite der Vorschubachse (4) und das zweite Bearbeitungswerkzeug (7) auf einer der ersten Seite gegenüberliegenden Seite der Vorschubachse (4) angeordnet ist, wobei das erste und zweite Beareitungswerkzeug (6, 7) entlang einer durch das Bearbeitungswerkzeug (6, 7) festgelegten zweiten Vorschubachse (8, 9) relativ zu dem Werkstück (3) verstellbar sind, wobei das Werkstück (3) um mindestens 180 Grad um die erste Vorschubachse (4) drehbar ist, **dadurch gekennzeichnet, dass** die Bearbeitung der einen Seite des Werkstücks (3) zunächst in einer ersten Position mit dem einen Bearbeitungswerkzeug (6, 7) und anschließend in einer zweiten, um 180° gedrehten Position mit dem anderen Bearbeitungswerkzeug (7, 6) erfolgt, wobei die Bearbeitung mit einem fest vorgegebenen Winkelversatz (α) zwischen 2 Grad und 15 Grad zwischen der ersten Vorschubachse (4) und einer Senkrechten (8', 9') zu der zweiten Vorschubachse (8, 9) der beiden Bearbeitungswerkzeuge (6, 7) erfolgt.

5. Verfahren nach Anspruch 4, wobei das herzustellende Zahnersatzteil (13) bzw. das Modell (50) mindestens eine Einschubachse (65) aufweist, **dadurch gekennzeichnet, dass** das herzustellende Zahnersatzteil (13) bzw. das Modell (50) so in dem Werkstück (69) angeordnet wird, dass die Einschubachse (61) gegenüber einer Senkrechten (60) auf einer Werkstückachse (66) einen Winkelversatz Beta (ß) zwischen 2 Grad und 15 Grad aufweist, insbesondere zwischen 3,5 und 10 Grad.

6. Verfahren nach Anspruch 5, **dadurch gekennzeichnet, dass** die Anordnung so gewählt ist, dass der Winkelversatz Beta (ß) der Einschubachse (65) höchstens dem Winkelversatz (α) zwischen der ersten Vorschubachse (4) und der Senkrechten (8',9') auf die zweite Vorschubachse (8, 9) mindestens eines der beiden Bearbeitungswerkzeuge (6, 7) entspricht.

## Claims

1. A machine tool for a workpiece (3) for producing dental prostheses (13) or models thereof, having a workpiece holder (2) for the workpiece (3) and a first and a second processing tool (6, 7), wherein the workpiece holder (2) and the first and the second processing tool (6, 7) are adjustable relative to one another along a first feed axis (4) extending through the workpiece holder (2), wherein the first processing tool (6) is arranged on a first side of the feed axis (4) and the second processing tool (7) is arranged on a side of the feed axis (4) opposite to the first side, wherein the first and the second processing tools (6, 7) are adjustable relative to the workpiece (3) along a second feed axis (8, 9) extending through the processing tool (6, 7), wherein the workpiece (3) is rotatable by at least 180 degrees about the first feed axis (4),
**characterized in that** the first feed axis (4), together with a perpendicular (8', 9') to the second feed axis (8, 9) of the two processing tools (6, 7), defines a fixed, predetermined angular offset (α) of between 2 degrees and 15 degrees.

2. The machine tool according to Claim 1, **characterized in that** the angular offset (α) lies in a range from 3 to 10 degrees, in particular in a range from 3.5 to 8 degrees.

3. The machine tool according to one of Claims 1 to 2, **characterized in that** the workpiece holder (2) is stationary along the first feed axis (4) and that the processing tool (6, 7) is arranged on a guide (14, 15), and is adjustable on the workpiece (3) along the first feed axis (4').

4. A method for producing dental prostheses (13) or models thereof, comprising a first and a second processing tool (6, 7), wherein a workpiece holder (2) for the workpiece (3) and the first and the second processing tool (6, 7) are adjustable relative to one another along a first feed axis (4) extending through the workpiece holder, wherein the first processing tool (6) is arranged on a first side of the feed axis (4) and the second processing tool (7) is arranged on a side of the feed axis (4) opposite to the first side, wherein the first and the second processing tools (6, 7) are adjustable relative to the workpiece (3) along a second feed axis (8, 9) defined through the processing tool (6, 7), wherein the workpiece (3) is rotatable by at least 180 degrees about the first feed axis (4), **characterized in that** the processing of the one side of the workpiece (3) is carried out initially in a first position using the one processing tool (6, 7) and subsequently in a second position, rotated by 180°, using the other processing tool (7, 6), wherein the processing is carried out at a fixed, predetermined angular offset (α) of between 2 degrees and 15 degrees between the first feed axis (4) and a perpendicular (8', 9') to the second feed axis (8, 9) of the two processing tools (6, 7).

5. The method according to Claim 4, wherein the dental prosthesis (13) to be produced or the model (50) has at least one insertion axis (65), **characterized in that** the dental prosthesis (13) to be produced or the model (50) is arranged in the workpiece (69) such that the insertion axis (61) has an angular offset beta (β), with respect to a perpendicular (60) to a workpiece axis (66), of between 2 degrees and 15, in particular between 3.5 and 10 degrees.

6. The method according to Claim 5, **characterized in that** the arrangement is selected so that the angular offset beta (β) of the insertion axis (65) corresponds at a maximum to the angular offset (α) between the first feed axis (4) and the perpendiculars (8', 9') to the second feed axis (8, 9) of at least one of the two processing tools (6, 7).

## Revendications

1. Machine d'usinage pour une pièce d'oeuvre (3) pour fabriquer des prothèses dentaires (13) ou des modèles de ces dernières, présentant un porte-pièce (2) destiné à la pièce d'oeuvre (3) ainsi qu'un premier et un second outil d'usinage (6, 7) ; le porte-pièce (2) d'une part et le premier et le second outil d'usinage (6, 7) d'autre part pouvant se déplacer l'un par rapport à l'autre le long d'un premier axe d'avancement (4) traversant le porte-pièce (2), le premier outil d'usinage (6) étant disposé sur un premier côté de l'axe d'avancement (4) et le second outil d'usinage (7) étant disposé sur un côté de l'axe d'avancement (4) opposé au premier côté, le premier et le second outil d'usinage (6, 7) pouvant être déplacés par rapport à la pièce d'oeuvre (3) le long d'un deuxième axe d'avancement (8, 9) traversant l'outil d'usinage (6, 7), la pièce d'oeuvre (3) pouvant tourner d'au moins 180 degrés sur le premier axe d'avancement (4),
**caractérisée en ce que** le premier axe d'avancement (4) et une perpendiculaire (8', 9') au deuxième axe d'avancement (8, 9) des deux outils d'usinage (6, 7) forment un décalage angulaire (α) bien prédéfini compris entre 2 et 15 degrés.

2. Machine d'usinage selon la revendication 1,
**caractérisée en ce que** le décalage angulaire (α) se trouve dans une plage allant de 3 à 10 degrés, notamment dans une plage allant de 3,5 à 8 degrés.

3. Machine d'usinage selon l'une des revendications 1 à 2,
**caractérisée en ce que** le porte-pièce (2) est fixe le long du premier axe d'avancement (4) et **en ce que** l'outil d'usinage (6, 7) est disposé sur un guidage (14, 15) et peut être déplacé sur la pièce d'oeuvre (3) le long du premier axe d'avancement (4').

4. Procédé de fabrication de prothèses dentaires (13) ou de modèles de ces dernières, présentant un premier et un second outil d'usinage (6, 7) ; un porte-pièce (2) destiné à la pièce d'oeuvre (3) d'une part et le premier et le second outil d'usinage (6, 7) d'autre part pouvant se déplacer l'un par rapport à l'autre le long d'un premier axe d'avancement (4) traversant le porte-pièce, le premier outil d'usinage (6) étant disposé sur un premier côté de l'axe d'avancement (4) et le second outil d'usinage (7) étant disposé sur un côté de l'axe d'avancement (4) opposé au premier côté, le premier et le second outil d'usinage (6, 7) pouvant être déplacés par rapport à la pièce d'oeuvre (3) le long d'un deuxième axe d'avancement (8, 9) établi à travers l'outil d'usinage (6, 7), la pièce d'oeuvre (3) pouvant tourner d'au moins 180 degrés sur le premier axe d'avancement (4), **caractérisé en ce que** l'usinage dudit côté de la pièce d'oeuvre (3) s'effectue d'abord dans une première position avec un outil d'usinage (6, 7), puis dans une seconde position tournée de 180° avec l'autre outil d'usinage (7, 6), l'usinage étant effectué avec un décalage angulaire (α) bien prédéfini compris entre 2 degrés et 15 degrés entre le premier axe d'avancement (4) et une perpendiculaire (8', 9') au deuxième axe d'avancement (8, 9) des deux outils d'usinage (6, 7).

5. Procédé selon la revendication 4, dans lequel la prothèse dentaire (13) à fabriquer, ou le modèle (50), présente au moins un axe d'introduction (65), **caractérisé en ce que** la prothèse dentaire (13) à fabriquer, ou le modèle (50), est disposée dans la pièce d'oeuvre (69) de telle manière que l'axe d'introduction (61) présente, par rapport à une perpendiculaire (60) à un axe de pièce d'oeuvre (66), un décalage angulaire bêta (β) compris entre 2 degrés et 15 degrés, notamment entre 3,5 et 10 degrés.

6. Procédé selon la revendication 5, **caractérisé en ce que** l'agencement est choisi de sorte que le décalage angulaire bêta (β) de l'axe d'introduction (65) corresponde, au plus, au décalage angulaire (α) entre le premier axe d'avancement (4) et la perpendiculaire (8', 9') au deuxième axe d'avancement (8, 9) d'au moins un des deux outils d'usinage (6, 7).
